# EUROPEAN PATENT SPECIFICATION

(11) **EP 4 536 765 B1**
(45) Date of publication and mention of the grant of the patent: **09.12.2026**
(21) Application number: 23730601.4
(22) Date of filing: 09.06.2023
(51) Int. Cl.: C09D 11/037, C09D 4/00, C09D 11/101, C09D 11/107

(54) **A METHOD FOR MANUFACTURING A MONOMER DISPERSION PIGMENT CONCENTRATE**
VERFAHREN ZUR HERSTELLUNG EINES MONOMERDISPERSIONSPIGMENTKONZENTRATS
PROCÉDÉ DE FABRICATION D`UN CONCENTRÉ PIGMENTAIRE EN DISPERSION DE MONOMÈRES

(30) Priority: 10.06.2022 NL 2032127
(43) Date of publication of application: 16.04.2025
(73) Proprietor: Trespa International B.V., 6002 SM Weert (NL)
(72) Inventor: THOMAS, Tom, 6002 SM Weert (NL); BOUROUINA, Nadia, 6002 SM Weert (NL); CHANDRAMOULI, Seethalakshmi, 6002 SM Weert (NL)
(74) Representative: Algemeen Octrooi- en Merkenbureau B.V.
(86) International application number: PCT/NL2023/050320
(87) International publication number: WO 2023/239239

(56) References cited:
- EP-A1- 0 079 759
- EP-A1- 2 832 803
- EP-A1- 3 686 251
- CN-A- 107 858 044
- JP-A- 2007 119 682
- US-A1- 2007 060 667

## Description

The present invention relates to a method for manufacturing a monomer dispersion pigment concentrate. The present invention is for making monomer dispersion pigment concentrate which is used for making colored décor.

Methods for producing a pigment preparation are well known in the art.

US 4,234,466 relates to a process for preparing a solid pigment dispersed composition which comprises subjecting a liquid composition and at least one pigment dispersed in the liquid composition to suspension or bulk polymerization to form a reaction mixture and recovering the product from suspension or bulk polymerization reaction mixture, the suspension polymerization being performed in the presence of a suspension stabilizer to produce a spherical particulate product.

US 2005/182155 relates to a method, comprising: providing at least one base powder; providing at least one stable colorant dispersion; and mixing said base powder(s) and said colorant dispersion(s) to form a colored mixture, wherein the stable colorant dispersion comprises at least one of a pigment and a dye in a carrier, wherein the carrier comprises water, an organic solvent, or a combination thereof.

US 2007/107633 relates to a solid pigment preparation comprising at least one pigment in a higher concentration than that which corresponds to the subsequent application and at least one carrier material selected from the group consisting of oligomers and polymers, prepared by dispersing the pigment or pigments or the pigment or pigments and at least one constituent in the melt of the carrier material or carrier materials or in the melt of the carrier material or carrier materials and at least one constituent for from 0.5 to 5 hours in a discontinuously operating dispersing apparatus and then discharging the mixture from the dispersing apparatus and allowing it to cool and solidify, wherein the solid pigment preparation is in the form of a dispersion in at least one organic solvent.

US 8,313,575 relates to a process for producing a pigment preparation in powder form, comprising the step of freeing a pigment preparation from solvents and subjecting the pigment preparation to drying, wherein the pigment preparation comprises as essential constituents at least one pigment coated with at least one polymerizable, ethylenically unsaturated compound, at least one non-ionic surface-active additive based on polyethers, polyglycerols or both, at least one anionic surface-active additive based on sulfonates, sulfates, carboxylates, phosphonates or phosphates and 10% to 90% by weight of water.

US 5,843,220 relates to a process for preparing a pigmented high molecular weight organic material, which comprises air jet milling from 1 to 40 parts by weight of an inorganic filler in the presence of from 60 to 99 parts by weight of an organic pigment to yield a pigment composition which is a uniform blend of the inorganic filler and the organic pigment, and incorporating an effective pigmenting amount of the pigment composition into the high molecular weight organic material, wherein the high molecular weight organic material is selected from the group consisting of cellulose ethers, cellulose esters, polyurethanes, polyesters, polycarbonates, polyolefins, polystyrene, polysulfones, polyamides, polycycloamides, polyimides, polyethers, polyether ketones, polyvinyl halides, polytetrafluoroethylene, acrylic and methacrylic polymers, rubber, silicone polymers, phenol/formaldehyde resins, melamine/formaldehyde resins, urea/formaldehyde resins, epoxy resins, diene rubbers and copolymers thereof. The largest dimension of 95 percent of the particles in the pigment composition is 18 µm or less.

US 2019/338085 relates to a method of manufacturing a pigment preparation, comprising: introducing into a dry mill apparatus comprising at least two rotors of at least one dispersing-wetting agent having a melting point in the range from 50-150° C., and at least one pigmentary additive selected from the group consisting of inorganic pigment, organic pigment, carbon black and dyes, mixing and milling the dispersing-wetting agent and the at least one pigmentary additive with one another to form the pigmentary preparation, wherein the average peripheral speed of the mill apparatus is from 5-50 m/s, wherein the pigmentary preparation comprises at least 60% by weight of the at least one pigmentary additive, the mixing and milling is conducting for 10-90 min, wherein the highest temperature achieved by the mixture of dispersing-wetting agent and pigmentary additive during mixing and milling is from 50 to 150° C. The particle diameter D90 (by number) of the at least one pigmentary additive in the recovered pigmentary preparation is the range from 0.9 to 4 µm.

US 2007/060667 relates to a process for preparing pigment concentrates for use in radiation curable paints, inks and coatings which comprises dispersing a dry pigment in granular or powder form in a radiation-curable composition in a kneader, a kneader/extruder or an extruder, wherein the radiation curable composition comprises a dispersed organic pigment in a radiation polymerizable ethylenically-unsaturated compound and other conventional additives, wherein the radiation polymerizable ethylenically-unsaturated compound contains one or more olefinic double bonds and are of low (monomeric) or relatively high (oligomeric) molecular weight, such as esters of ethylenically unsaturated monofunctional or polyfunctional carboxylic acids and polyols or polyepoxides.

CN 107 858 044 relates to a UV curable jet printing ink comprising, in parts by weight, 60-90 parts of acrylic acid monomers, 5-25 parts of titanium dioxide, and 3-10 parts of photo initiators, wherein the acrylic acid monomers include trifunctional acrylic acid monomer, difunctional acrylic monomer, monofunctional acrylic monomer.

JP 2007 119682 relates to an active energy ray-curable conductive ink composition containing a conductive powder, an active energy ray-curable resin, and a diluent as essential components, wherein the active energy ray-curable resin comprises a polyfunctional urethane acrylate. The conductive powder is silver, or a silver compound and the solvent used as the diluent is a glycol ether.

EP 3 686 251 relates to a radiation curable inkjet ink containing a polymerizable compound including a vinyl ether group or a vinyl amide group, optionally an amine synergist including an alkanolamine group or a dimethyl benzoate group, optionally a Norrish Type II photoinitiator and a singlet oxygen quencher. The viscosity range mentioned is max 30 m Pa s and the pigment load is 0.1 to 13 wt.%.

EP 0 079 759 relates to a method of providing surface replication in a coating on a sheet material, wherein the coating compositions can be cured by electron-beam radiation and include the following: a moderate molecular weight (300 to 800 g./mole) functional oligomer, a reactive monomer diluent (a mono or multifunctional acrylate or methacrylate) such as trimethylolpropane triacrylate or isodecyl acrylate, pigments or fillers such as clay, silica or diatomaceous earth, reactive or non-reactive silicones; and organic diluents such as acetone or carbon tetrachloride.

EP2832803 relates to a radiation-curable inkjet ink composition comprising Pigment Yellow 184 (PY184), a polymeric dispersant, a polymerizable compound, and a polymerization initiator, the content of PY184 being 2 to 10 mass%, and the 90% volume particle size of PY184 being 200 to 400 nm.

In some of the production processes discussed above the step of grinding the pigment is carried out in a resin, solvent system or even an aqueous system. The pigment paste manufacturing is mainly done by grinding the pigment in a resin and the pigment pastes are used for making all uni and metallic colors. The consequence of such way of making pigment paste provides less scope for making different products having different characteristic for exterior or interior application. In that context it is to be noted that the technical requirements for interior and exterior panels are different, so there is a need to provide pigment pastes specially designed for interior and exterior use. Thus, in practice a lot of different color pastas are needed for coloring purposes which will lead to a high number of different color pastes.

An object of the present invention is to produce a stable dispersed pigment paste which comprises a dispersion in a specific vehicle so that this dispersion can be blended with different types of carriers to make colors for different product lines, for example product lines for making high pressure laminates (HPL).

Another object of the present invention is to develop a method for preparing a stable dispersed pigment paste wherein the colors obtained match with the colors made according to the standard methods on basis of dispersing a pigment in a resin.

Another object of the present invention is to provide colored panels showing an outdoor durability that meets the outdoor durability of commercial panels colored on basis of dispersing a pigment in a resin.

The present invention relates to a method for manufacturing a monomer dispersion pigment concentrate, the method comprising the following:
preparing a pre dispersed pigment concentrate by mixing, under high speed of at least 800 RPM, dry pigment powder, monomer, and at least one additive,
transferring the pre dispersed pigment concentrate thus prepared to a bead mill, and
subjecting the pre dispersed pigment concentrate to a grinding step in the bead mill for obtaining the monomer dispersion pigment concentrate.

On basis of the above method one or more objects are achieved. The present inventors found that by dispersion/grinding of the pigments in an acceptable monomer/monomers dispersion medium different resins can be added at a later stage for different base coat product lines. The monomer is a binder. The addition of the resin can be done during the color base coat preparation, or the addition of the resin can be in the dosing units along with the pigment pastes as well.

In the description the term "slurry of monomer, wetting and dispersing additives and dry pigment powder" refers to the pre dispersed pigment concentrate. In the present method as discussed above only monomer is used as a dispersion medium. In addition, the present monomer dispersion pigment concentrate does not contain any photo initiators and co-initiators.

In an example of the present method no polymers as binder are present in the step of preparing the pre dispersed pigment concentrate. The pre dispersed pigment concentrate is based on monomer that functions as the sole binder for all the components.

The pigments are agglomerated in which the spaces between the individual pigment particles contain air and moisture. Interactive forces between the particles are relatively small so that such forces can be overcome by grinding, i.e. a pre dispersion. During the pigment pre dispersion, few pigment particles are wetted in the monomers with an aid of wetting and dispersing agent. Small agglomerates are broken up by impact and shearing forces. Pre dispersion or mixing of the starting materials, i.e. dry pigment powder, monomer, and at least one additive, is done using a high speed dissolver.

In an example the step of preparing the slurry or pre dispersed pigment concentrate is carried out in the absence of any solvent or water.

In an example the monomer is chosen from the group of methacrylates and acrylates, or a combination thereof. The present inventors found that such monomers provided a good pigment wetting. A low surface tension of the liquid phase will help to wet sufficiently the agglomerates which leads to a more efficient grinding. In addition, the low viscosity of the liquid phase will penetrate faster in the agglomerate leading also to a more efficient grinding by reducing the cohesive forces between the primary pigments. Preferred monomers are low molecular weight molecules.

In an example the methacrylates and acrylates are multifunctional methacrylates and acrylates, preferably aliphatic multifunctional methacrylates and acrylates, more preferably aliphatic tri-methacrylates, and tri-acrylates. The present inventors found that such methacrylates and acrylates influenced the coating performance, wherein especially the di or tri-acrylate functionality ensured balanced coating properties/performances. In addition, the monomers used may not lead to yellowing. Suitable monomers include aliphatic di-acrylate, aliphatic tri-acrylate, propoxylated aliphatic tri-acrylate and propoxylated di-acrylate. Examples are propoxylated neopentyl glycol diacrylate, 1,6 hexanediol diacrylate, tripropylene glycol diacrylate, trimethylolpropane triacrylate, ethoxylated trimethylolpropane triacrylate, propoxylated trimethylolpropane triacrylate and glycerine propoxylated triacrylate.

In order to achieve a stable and homogenous distribution of the pigment in the monomer, the dispersion of the particles needs to be optimized. Although the force exerted by the dispersion machinery can help in reducing the agglomerates to aggregates, the presence of pigment wetting and dispersing molecules can greatly enhance pigment wetting throughout the dispersion process and reduce surface tension. In addition, a specific molecular structure of side groups/chains, which are able to adsorb onto the pigment, the pigment wetting and dispersing molecules provide sufficient stabilization and reduce uncontrolled flocculation.

The present inventors found that poorly distributed particles, i.e. aggregation of pigment particles, may lead to reduced color strength and gloss levels and severely modify the rheology (e.g.: viscosity increase) of the system.

In an example the at least one additive is chosen from the group of wetting additives and dispersing additives, or a combination thereof. Suitable examples include Disperbyk-2013 and Disperbyk-111 (supplier BYK) and Efka PX 4701, Efka PX 4703 (supplier BASF) and CLiQSPERSE (supplier Cliqsperse). In an example the type of additive in terms of chemical composition is a 100% active block polyacrylic co-polymer and which has a has a cationic character.

In an example the step of grinding the slurry or pre dispersed pigment concentrate is carried out in such a way that after the step of grinding the particle size of the pigment in the monomer dispersion pigment concentrate is below 15 microns, preferably below 10 microns. The desired particle size achieved during the grinding step is in the range of 6 to 15 microns. The present inventors found that if the particles are too small or too high the stability of the concentrate is not good. Particles above 25 microns can lead to application issues, such as screen blockage and non-uniform surface coatings. If the particles are too small the color strength varies, and it is difficult to do a production color matching.

It is clear that the particle size of the present monomer dispersion pigment concentrate, the pigment load and the viscosity of present monomer dispersion pigment concentrate are in such a range that the present monomer dispersion pigment concentrate is unsuitable for being used in an ink jet coating process or ink jet apparatus.

In an example the pigment concentration in the monomer dispersion pigment concentrate is in a range of 60-80 wt.% for inorganic pigments and in a range of 20 - 40 wt.% for organic pigments, based on the total weight of the monomer dispersion pigment concentrate. Examples of inorganic pigments include titanium dioxide, ferrous pigments, and nickel titanate. Examples of organic pigments include C.I. Pigment Red 202, C.I. Pigment Red 122, C.I. Pigment Red 179, C.I. Pigment Red 170, C.I. Pigment Red 177, C.I. Pigment Red 254, C.I. Pigment Red 255, C.I. Pigment Red 264, C.I. Pigment Red 168, C.I. Pigment Brown 23, C.I. Pigment Yellow 109, C.I. Pigment Yellow 110, C.I. Pigment Yellow 184, C.I. Pigment Orange 61, C.I. Pigment Orange 71, C.I. Pigment Orange 73, C.I. Pigment Orange 48, C.I. Pigment Orange 49, C.I. Pigment Blue 15, C.I. Pigment Blue 60, C.I. Pigment Violet 23, C.I. Pigment Violet 37, C.I. Pigment Violet 55, C.I. Pigment Violet 19, C.I. Pigment Green 7, and C.I. Pigment Green 36, or a mixture or solid solution thereof.

In an example the step of mixing monomer, at least one additive and dry pigment powder is carried out under high speed, preferably at least 800 RPM, for at least 10 minutes. The present inventors found that a too high energy input may lead to an increase in temperature resulting in a possible hardening of the pigments which is undesirable.

In an example the temperature of the slurry during the step of grinding is at most 50 degr C, preferably at most 45 degr C. A high temperature during the step of grinding inside the milling chamber may lead to polymerization of the components of the slurry which is undesirable.

The present invention also relates to a method for preparing a coating composition, wherein at least one monomer dispersion pigment concentrate obtained according to a method as discussed above is mixed with resin for obtaining the coating composition. Such a coating composition is thus obtained by blending the monomer dispersion pigment concentrate obtained by the present method with resin.

In an example of a method for preparing a coating composition two or more monomer dispersion pigment concentrates having different types of pigments are mixed with resin for obtaining the coating composition.

In an example the resin is a polymerizable compound that contains acrylate or methacrylate groups.

The resin acrylate used in the present invention to blend is a polymerizable compound that contains acrylate or methacrylate groups. It can be an oligomer alone or a mixture of several oligomers or a mixture of oligomer with one or more monomers. The oligomer acrylate may have a molecular weight between 500 and 10000 Da and the monomer between 100 to 1000 Da. Viscosity may range around 7 Pa.s at 35 degr C. The monomers and the oligomers can be mono, di or highly functional (metha)acrylates. The oligomer could be for example any aliphatic or aromatic urethan (metha)acrylate, polyester (metha)acrylate, epoxy (metha)acrylate, polyether acrylate monomer.

The viscosity of the concentrate, i.e. the monomer dispersion pigment concentrate, measured using Brookfield viscometer spindle -1, at 35 degree, is in a viscosity range from 240 to 750 mPa*s.

In an example two or more monomer dispersion pigment concentrates having different types of pigments are mixed with resin for obtaining a coating composition.

The present invention also relates to a method for making a colored décor, comprising the following steps:
providing a coating composition obtained as discussed above;
applying the coating composition on a substrate;
curing the coated substrate via electron-beam curing thereby obtaining the colored décor.

Methods for curing a coated substrate are well known and reference is herein made to, inter alia, EP 2 574 476 and EP 3 680 085 in the name of the present applicant.

The present invention also relates to a panel provided with a colored décor obtained as discussed above. Methods for preparing a panel are well known and reference is herein made to, inter alia, US 4,789,604 and US 4,927,572 in the name of the present applicant.

The present invention is based on the finding that the concept of monomer dispersion pigment concentrate enables the manufacturing of different basecoats using same pigment paste with one dosing system for making different product lines.

The invention will be explained in detail by means of the following examples. The percentages given are by weight.

### Examples

First step is mixing the monomer with a proper wetting and a dispersing additives and slowly adding the pigment powders to it. The monomer dispersion pigment concentrate thus obtained is then transferred to a grinding mill.

In a specific example the steps for preparing the pre dispersed pigment concentrate include:
1. Adding the required amount of monomer;
2. Adding the required amount of wetting and dispersing additives as per the formulation;
3. Stirring the components obtained after step 2 under a high speed dissolver
4. Adding the required amount of pigment under slow stirrer to get a homogenous mixture
5. Stirring the mixture obtained after step 5 under high speed dissolver.

The slurry of monomer, wetting and dispersing additives and dry pigment powder, i.e. the pre dispersed pigment concentrate, is then transferred to a grinding mill.

The pigment agglomerates of the slurry are broken up and disrupted into smaller units and dispersed (uniformly distributed) through mechanical energy (impact and shear forces). In an example the step of grinding the slurry is done using a bead grinding mill with a desired beads to achieve the monomer dispersion pigment concentrate. The grinding time varies for different pigments depending on, inter alia, the surface treatment, oil absorption values and the energy input given for the pigment to achieve a desired particle size. The method of measuring the particle size includes the use of an automated Hegman gauge (supplier: TIDAS) to check the fineness of the pigment dispersion. The sample is automatically drawn down over the Hegman gauge, which is viewed by a high-resolution camera. A histogram of particle distribution is produced. This is interrogated by an algorithm to generate a sample rating. A Hegman gauge is thus an instrument which indicates the fineness of grind or the presence of coarse particles and agglomeration in a dispersion. It is commonly used to determine how finely ground the particles of pigment dispersed in a sample are. Well known methods are for example ASTM D1210-05(2022) and ASTM D1316-20.

In a specific example the steps for preparing the monomer dispersion pigment concentrate include:
6. Adding the pre dispersed pigment concentrate into the bead grinding mill;
7. Controlling the temperature of the mill chamber and the sealant of the grinding mill;
8. Check the fineness of grind or the presence of coarse particles and agglomeration in the pre dispersed pigment concentrate;
9. Grinding of the pre dispersed pigment concentrate until the required particle size is achieved for obtaining the monomer dispersion pigment concentrate.

The following monomer dispersion pigment concentrates were prepared according to the above described process for manufacturing a monomer dispersion pigment concentrate. Such a monomer dispersion pigment concentrates can be blended with different types of carriers to make colors for different product lines, for example product lines for making high pressure laminates (HPL).

The experimental results of the monomer dispersion pigment concentrates are shown in Table 1 and the results of the HPL panel properties in Table 2. Table 3 provides information about the pigment. In all formulations #1-#4 propoxylated trimethylolpropane triacrylate is used as monomer acrylate, additive- 1 is 100% active block polyacrylic co-polymer and additive -2 is a phthalocyanine derivative.

**Table 1: Formulation of monomer dispersion pigment concentrate**

| Formulation# | | Pigment (wt.%) | Monomer (wt.%) | Additive-1 (wt.%) | Additive-2 (wt.%) | Process conditions (mixing) | Process conditions (grinding) | Finess of grinding |
|---|---|---|---|---|---|---|---|---|
| | | | | | | | | |
| 1 | Black | 25 | 66 | 9 | | 1000 RPM | 3300 RPM, degr 40 | <10 microns |
| 2 | Red oxide | 60 | 37,6 | 2,4 | | 1000 RPM | 3300 RPM, degr 40 | <10 microns |
| 3 | Blue 15:3 | 20 | 67 | 8 | 5 | 1000 RPM | 3300 RPM, degr 40 | <10 microns |
| 4 | Pigment Violet 23 | 25 | 67 | 10 | 3 | 1000 RPM | 3300 RPM, degr 40 | <10 microns |

**Table 2: HPL panel properties**

| | HPL panel properties | | |
|---|---|---|---|
| Formulation# | Accelerated weathering | Resistance to surface wear- EN438-2 | Resistance to scratching- EN438 -2 |
| | | | |
| 1 | VG | G | VG |
| 2 | VG | G | VG |
| 3 | G | G | G |
| 4 | G | G | G |

In Table 2 the terms "VG" and "G" mean" very good" and "good", respectively. From Table 2 it is clear that for several different pigments the HPL panel properties are qualified as good and very good

**Table 3: Formulation composition**

| Formulation# | | Pigment (wt.%) | Monomer (wt.%) |
|---|---|---|---|
| | | | |
| 1 | Black | 25 | 66 |
| 2 | Red oxide | 60 | 37,6 |
| 3 | Blue 15:3 | 20 | 67 |
| 4 | Pigment Violet 23 | 25 | 67 |

## Claims

1. A method for manufacturing a monomer dispersion pigment concentrate, the method comprising the following:
preparing a pre dispersed pigment concentrate by mixing, under high speed of at least 800 RPM, dry pigment powder, monomer, and at least one additive,
transferring the pre dispersed pigment concentrate thus prepared to a bead mill, and
subjecting the pre dispersed pigment concentrate to a grinding step in the bead mill for obtaining the monomer dispersion pigment concentrate, wherein the particle size of the pigment in said monomer dispersion pigment concentrate is in a range of 6 to 15 microns, measured according to the method described in the description.

2. A method according to claim 1, wherein the step of preparing the pre dispersed pigment concentrate is carried out in the absence of any solvent or water.

3. A method according any one or more of the preceding claims, wherein the monomer is chosen from the group of methacrylates and acrylates, or a combination thereof.

4. A method according to claim 3, wherein the methacrylates and acrylates are multifunctional methacrylates and acrylates, preferably aliphatic multifunctional methacrylates and acrylates, more preferably aliphatic tri-methacrylates, and tri-acrylates.

5. A method according to any one or more of the preceding claims, wherein the at least one additive is chosen from the group of wetting additives and dispersing additives, or a combination thereof.

6. A method according to any one or more of the preceding claims, wherein the pigment concentration in the monomer dispersion pigment concentrate is in a range of 60-80 wt.% for inorganic pigments and in a range of 20 -40 wt.% for organic pigments, based on the total weight of the monomer dispersion pigment concentrate.

7. A method according to any one or more of the preceding claims, wherein the step of mixing monomer, additive and dry pigment powder is carried out under high speed, preferably at least 800 RPM, for at least 10 minutes.

8. A method according to any one or more of the preceding claims, wherein during the step of grinding the temperature of the pre dispersed pigment concentrate is at most 50 degr C, preferably at most 45 degr C.

9. A method according to any one or more of the preceding claims, wherein the viscosity of the monomer dispersion pigment concentrate, measured using Brookfield viscometer spindle -1, at 35 degree, is in a viscosity range from 240 to 750 mPa*s.

10. A method for preparing a coating composition, wherein at least one monomer dispersion pigment concentrate obtained according to a method according to any one or more of the preceding claims is mixed with resin for obtaining the coating composition.

11. A method according to claim 10, wherein two or more monomer dispersion pigment concentrates having different types of pigments are mixed with resin for obtaining the coating composition.

12. A method according to any one or more of claims 10-11, wherein the resin is a polymerizable compound that contains acrylate or methacrylate groups.

13. A method for making a colored décor, comprising the following steps:
providing a coating composition obtained according to a method according any one of claims 10-12;
applying the coating composition on a substrate;
curing the coated substrate via electron-beam curing thereby obtaining the colored décor.

14. A panel provided with a colored décor obtained according to the method according to claim 13.

## Patentansprüche

1. Verfahren zur Herstellung eines Monomerdispersionspigmentkonzentrats, wobei das Verfahren Folgendes umfasst:
Zubereiten eines vordispergierten Pigmentkonzentrats durch Mischen, unter hoher Geschwindigkeit von zumindest 800 U/min, von trockenem Pigmentpulver, Monomer und zumindest einem Additiv,
Übertragen des so zubereiteten vordispergierten Pigmentkonzentrats an eine Perlmühle, und
Unterziehen des vordispergierten Pigmentkonzentrats einem Mahlschritt in der Perlmühle, um das Monomerdispersionspigmentkonzentrat zu erhalten, wobei die Partikelgröße des Pigments in dem Monomerdispersionspigmentkonzentrat in einer Spanne von 6 bis 15 Mikron ist, gemessen nach dem Verfahren, das in der Beschreibung beschrieben ist.

2. Verfahren nach Anspruch 1, wobei der Schritt des Zubereitens des vordispergierten Pigmentkonzentrats in der Abwesenheit von beliebigem Lösungsmittel oder Wasser durchgeführt wird.

3. Verfahren nach einem oder mehreren der vorhergehenden Ansprüche, wobei das Monomer aus der Gruppe von Methacrylaten und Acrylaten oder einer Kombination davon gewählt ist.

4. Verfahren nach Anspruch 3, wobei die Methacrylate und Acrylate multifunktionelle Methacrylate und Acrylate, bevorzugt aliphatische multifunktionelle Methacrylate und Acrylate, bevorzugter aliphatische Trimethacrylate und Triacrylate sind.

5. Verfahren nach einem oder mehreren der vorhergehenden Ansprüche, wobei das zumindest eine Additiv aus der Gruppe von Benetzungsadditiven und Dispergieradditiven oder einer Kombination davon gewählt ist.

6. Verfahren nach einem oder mehreren der vorhergehenden Ansprüche, wobei die Pigmentkonzentration in dem Monomerdispersionspigmentkonzentrat in einer Spanne von 60-80 Gew.-% für anorganische Pigmente und in einer Spanne von 20-40 Gew.-% für organische Pigmente basierend auf dem Gesamtgewicht des Monomerdispersionspigmentkonzentrats ist.

7. Verfahren nach einem oder mehreren der vorhergehenden Ansprüche, wobei der Schritt des Mischens von Monomer, Additiv und trockenem Pigmentpulver unter hoher Geschwindigkeit, bevorzugt zumindest 800 U/min, für zumindest 10 Minuten durchgeführt wird.

8. Verfahren nach einem oder mehreren der vorhergehenden Ansprüche, wobei während des Schrittes des Mahlens die Temperatur des vordispergierten Pigmentkonzentrats höchstens 50 °C, bevorzugt höchstens 45 °C ist.

9. Verfahren nach einem oder mehreren der vorhergehenden Ansprüche, wobei die Viskosität des Monomerdispersionspigmentkonzentrats, gemessen unter Verwendung von Brookfield-Viskosimeter-Spindel -1, bei 35 Grad in einer Viskositätsspanne von 240 bis 750 mPa*s ist.

10. Verfahren zur Zubereitung einer Beschichtungszusammensetzung, wobei zumindest ein Monomerdispersionspigmentkonzentrat, das nach einem Verfahren nach einem oder mehreren der vorhergehenden Ansprüche erhalten wird, mit Harz gemischt wird, um die Beschichtungszusammensetzung zu erhalten.

11. Verfahren nach Anspruch 10, wobei zwei oder mehr Monomerdispersionspigmentkonzentrate mit unterschiedlichen Arten von Pigmenten mit Harz gemischt werden, um die Beschichtungszusammensetzung zu erhalten.

12. Verfahren nach einem oder mehreren der Ansprüche 10-11, wobei das Harz eine polymerisierbare Verbindung ist, die Acrylat- oder Methacrylatgruppen enthält.

13. Verfahren zur Fertigung eines farbigen Dekors, umfassend die folgenden Schritte:
Bereitstellen einer Beschichtungszusammensetzung, die nach einem Verfahren nach einem der Ansprüche 10-12 erhalten wird;
Auftragen der Beschichtungszusammensetzung auf ein Substrat;
Härten des beschichteten Substrats über Elektronenstrahlhärten, wodurch das farbige Dekor erhalten wird.

14. Platte, die mit einem farbigen Dekor bereitgestellt ist, das nach dem Verfahren nach Anspruch 13 erhalten wird.

## Revendications

1. Procédé de fabrication d'un concentré pigmentaire en dispersion dans un monomère, le procédé comprenant ce qui suit :
la préparation d'un concentré pigmentaire pré-dispersé en mélangeant, à une vitesse élevée d'au moins 800 tr/min, une poudre de pigment sec, un monomère et au moins un additif,
le transfert du concentré pigmentaire pré-dispersé ainsi préparé dans un broyeur à billes, et
la soumission du concentré pigmentaire pré-dispersé à une étape de broyage dans le broyeur à billes pour obtenir le concentré pigmentaire en dispersion dans un monomère, dans lequel la taille des particules du pigment dans ledit concentré pigmentaire en dispersion dans un monomère est comprise dans une plage de 6 à 15 microns, mesurée selon le procédé décrit dans la description.

2. Procédé selon la revendication 1, dans lequel l'étape de préparation du concentré pigmentaire pré-dispersé est effectuée en l'absence de tout solvant ou d'eau.

3. Procédé selon l'une quelconque ou plusieurs des revendications précédentes, dans lequel le monomère est choisi dans le groupe de méthacrylates et d'acrylates ou d'une combinaison de ceux-ci.

4. Procédé selon la revendication 3, dans lequel les méthacrylates et les acrylates sont des méthacrylates et acrylates multifonctionnels, de préférence des méthacrylates et acrylates multifonctionnels aliphatiques, idéalement des triméthacrylates et triacrylates aliphatiques.

5. Procédé selon l'une quelconque ou plusieurs des revendications précédentes, dans lequel l'au moins un additif est choisi dans le groupe d'additifs mouillants et d'additifs dispersants ou d'une combinaison de ceux-ci.

6. Procédé selon l'une quelconque ou plusieurs des revendications précédentes, dans lequel la concentration en pigment dans le concentré pigmentaire en dispersion dans un monomère est comprise dans une plage de 60 à 80 % en poids pour des pigments inorganiques et dans une plage de 20 à 40 % en poids pour des pigments organiques, sur la base du poids total du concentré pigmentaire en dispersion dans un monomère.

7. Procédé selon l'une quelconque ou plusieurs des revendications précédentes, dans lequel l'étape de mélange de monomère, d'additif et de poudre de pigment sec est effectuée à une vitesse élevée, de préférence d'au moins 800 tr/min, pendant au moins 10 minutes.

8. Procédé selon l'une quelconque ou plusieurs des revendications précédentes, dans lequel, pendant l'étape de broyage, la température du concentré pigmentaire pré-dispersé est d'au plus 50 degrés C, de préférence d'au plus 45 degrés C.

9. Procédé selon l'une quelconque ou plusieurs des revendications précédentes, dans lequel la viscosité du concentré pigmentaire en dispersion dans un monomère, mesurée à l'aide de la broche -1 du viscosimètre Brookfield, à 35 degrés, est comprise dans une plage de viscosité de 240 à 750 mPa*s.

10. Procédé de préparation d'une composition de revêtement, dans lequel au moins un concentré pigmentaire en dispersion dans un monomère obtenu selon un procédé selon l'une quelconque ou plusieurs des revendications précédentes est mélangé avec une résine pour obtenir la composition de revêtement.

11. Procédé selon la revendication 10, dans lequel deux concentrés pigmentaires en dispersion dans un monomère ou plus, comportant différents types de pigments sont mélangés avec une résine pour obtenir la composition de revêtement.

12. Procédé selon l'une quelconque ou plusieurs des revendications 10 et 11, dans lequel la résine est un composé polymérisable qui contient des groupes acrylate ou méthacrylate.

13. Procédé de réalisation d'un décor coloré, comprenant les étapes suivantes :
la fourniture d'une composition de revêtement obtenue selon un procédé selon l'une quelconque des revendications 10 à 12 ;
l'application de la composition de revêtement sur un substrat ;
le durcissement du substrat revêtu par durcissement par faisceau d'électrons, pour obtenir ainsi le décor coloré.

14. Panneau muni d'un décor coloré obtenu selon le procédé selon la revendication 13.
